# FASCICULE DE BREVET EUROPEEN

(11) **EP 2 336 279 B1**
(45) Date de publication et mention de la délivrance du brevet: **19.09.2012**
(21) Numéro de dépôt: 10290637.7
(22) Date de dépôt: 02.12.2010
(51) Int. Cl.: C11B 3/10, C11C 3/04, C10L 1/02

(54) **Procédé de production d'esters alkyliques à partir d'huile végétale ou animale et d'un monoalcool aliphatique avec purification à chaud en lit fixe**
Herstellungsverfahren von Alkylestern aus Pflanzenöl oder tierischem Fett und einem alipathischen Monoalkohol mit Heißreinigung in einem feststehenden Lager
Method for producing alkyl esters using vegetable or animal oil and an aliphatic mono-alcohol with hot purification in a fixed bed

(30) Priorité: 16.12.2009 FR 0906097
(43) Date de publication de la demande: 22.06.2011
(73) Titulaire: IFP Energies nouvelles, 92852 Rueil-Malmaison Cedex (FR)
(72) Inventeur: Dandieu, Aurélie, 38540 Saint-Just Chaleyssin (FR); Coupard, Vincent, 69100 Villeurbaine (FR); Bournay, Laurent, 69440 Chaussant (FR); Rouquette Charlotte, 92150 Suresnes (FR)

(56) Documents cités:
- EP-A1- 0 376 406
- WO-A1-03/075671
- WO-A1-2007/098928
- US-A- 3 036 102
- US-A- 4 880 652
- US-A- 5 391 385

## Description

### Domaine de l'invention

L'invention concerne un procédé de fabrication d'esters alkyliques à partir d'huiles végétales ou animales et d'un monoalcool aliphatique.

### Étude de l'art antérieur

En vue de leur utilisation comme biocarburant, les esters alkyliques d'huiles végétales sont produits à partir d'huiles végétales issues par exemple de colza, de tournesol, de soja ou même de palme. Mal adaptées à l'alimentation directe des moteurs diesel modernes des véhicules particuliers, les huiles végétales constituées essentiellement de triglycérides doivent être transformées par une réaction de transestérification avec un alcool, par exemple le méthanol ou l'éthanol, introduit en excès pour produire des esters méthyliques d'huiles végétales (EMHV) et de la glycérine.

Cette réaction est schématisée de la façon suivante :
1 triglycéride + 3 alcool→ 3 esters de corps gras + glycérine

Dans les cas où la réaction de transestérification est couplée à une réaction d'estérification, les schémas réactionnels sont les suivants :
acide gras + alcool → esters d'acide gras + eau
acide gras + glycérine → glycéride +eau

Des procédés de fabrication d'esters alkyliques ont déjà été développés. Certains utilisent les voies classiques de la catalyse homogène avec des catalyseurs solubles comme la soude ou le méthylate de sodium, en faisant réagir une huile neutre et un alcool. On peut citer par exemple les procédés décrits dans le brevet EP-0 523 767, avec la mise en oeuvre continue d'un catalyseur homogène basique ou le brevet FR-B1-2 890 961 déposé au nom de la Demanderesse qui décrit un procédé de fabrication d'esters éthyliques. Toutefois, ce type de procédé présente plusieurs inconvénients. Il est en effet nécessaire de mettre en oeuvre une chaîne de traitements complexe et laborieuse pour atteindre les spécifications recherchées pour la glycérine et l'ester produits.

Des procédés par catalyse hétérogène ont été décrits. Le brevet FR-B1-2 752 242 décrit un procédé de fabrication d'un ester d'acide gras et de glycérine de haute pureté à partir d'une huile végétale et d'un monoalcool aliphatique en présence d'un catalyseur solide à base d'aluminate de zinc. Les brevets FR-B-2 855 517, FR-B-2 855 518, FR-B-2 855 519 décrivent des procédés fabrication d'esters alkyliques mettant en jeu des catalyseurs à base d'oxydes mixtes comprenant du titane, du zirconium, de l'antimoine et/ou de l'aluminium. Les brevets FR-B-2 869 612 et FR-B-2 869 613 décrivent l'utilisation de catalyseurs à base d'oxydes de zinc, bismuth, titane et/ou aluminium. Plus récemment, le brevet FR-B-2 914 927 décrit l'utilisation d'un catalyseur hétérogène à base de phosphate ou composé organophosphoré du groupe 4. On peut également citer la demande de brevet WO 2007/043 062 qui décrit un procédé de transestérification utilisant des catalyseurs acides à base de ferrocyanure de zinc.

Les procédés par voie hétérogène permettent d'obtenir des rendements élevés en esters alkyliques, ainsi qu'une glycérine à haut degré de pureté. Ce dernier point a un impact très important sur l'économie du procédé puisque le prix de la glycérine dépend essentiellement de son niveau de pureté.

Les huiles végétales d'origine terrestre ou aquatique, ou graisses animales utilisées comme matières premières dans ces procédés sont composées principalement de triglycérides à hauteur de 80-98% poids. Les constituants mineurs, présents à hauteur de 2 à 20% poids, sont des acides gras libres, des mono- et diglycérides, des composés oxydes de glycéride issu de la dégradation de l'huile, des cires (hydrocarbures naturels présents dans les huiles, des protéines contenant du soufre et/ou de l'azote, des phospholipides, des tocophérols, des stérols, des colorants naturels ainsi que des composés odorants plus ou moins volatils. Les huiles brutes peuvent également contenir comme composés mineurs des espèces contenant des hétéroélements tels que le phosphore, le magnésium, le calcium, le fer ou le zinc à des teneurs pouvant aller jusqu'à 2500 ppm, sous forme principalement de phospholides et/ou de stérols dans le cas du phosphore, du magnésium et du calcium ou présent dans les pigments pour le cas particulier du magnésium et sous forme de stérols dans le cas du fer et/ou du zinc (Oils and fats manual : A comprehensive treatise, Volume 1 page 90, Karleskind A. et al.).

Pour éliminer ces composés mineurs, l'huile brute de pression ou d'extraction est classiquement raffinée, en vue de son utilisation. Pour une utilisation comme biocarburant, les étapes classiques du raffinage de l'huile sont les suivantes :
- la démucilagination consiste à éliminer les phospholipides ou mucilages qui précipitent en présence d'eau acidulée ;
- la neutralisation en présence d'une solution de soude de l'huile démucilaginée permet de neutraliser au moins une partie des acides gras libres présents dans l'huile. Les pâtes de neutralisation formées lors de cette étape entraînent une partie des impuretés contenues dans l'huile ;
- le lavage à l'eau pour éliminer les traces de sels de sodium ;
- le séchage sous vide.

Après ce raffinage, on parle d'huile semi-raffinée. En effet, pour l'obtention d'une huile de qualité alimentaire, ou encore "huile raffinée", d'autres opérations telles que la décolorisation et la désodorisation sont nécessaires.

Toutefois, à l'issue de ce raffinage, les huiles, dites semi-raffinées, peuvent encore contenir jusqu'à 20 ppm de phosphore, calcium, magnésium, sous forme de phospholides et de fer ou zinc sous forme de stérols (Oils and fats manual : A comprehensive treatise, Volume 1 page 90, Karleskind A. et al.).

Dans les conditions de température du procédé de transestérification hétérogène, ces espèces sont transformées en phosphate mixte de calcium et de magnésium de type CaₓMg_{y}(PO₄)_{z}, insolubles dans le milieu réactionnel. Ces espèces solides se déposent alors dans le lit catalytique et impliquent une conduite délicate du réacteur avec une augmentation de la perte de charge dans le réacteur et une désactivation du catalyseur par bouchage des pores. Ces espèces peuvent également sortir du réacteur et être transportées dans le circuit de traitement de la glycérine. La qualité de la glycérine se trouve alors dégradée par la présence de ces espèces solides. Dans le cas particulier d'un procédé qui opère en deux étapes avec un recyclage partiel d'éléments de la chaîne de séparation de la glycérine (glycérine, méthanol, et espèces non converties) tel que décrit dans le brevet FR-B-2 838 433, ces impuretés circulent alors à différents endroits dans le procédé, même en amont du réacteur, et posent des problèmes opératoires de bouchage. C'est pourquoi, afin de rendre ce procédé opérable, les charges admissibles ont été limitées aux charges semi raffinées ou DNS (Démucilaginée, Neutralisée et Séchée).

D'autre part, en plus des phospholipides, les huiles contiennent naturellement des stérols glucosylés (jusqu'à 500ppm selon les origines) qui peuvent être sous deux formes différentes: stérols glucosylés acylés et non acylés qui posent problème de colmatage dans le réacteur de transestérification hétérogène ainsi que dans les esters finaux pour leur tenue au froid, en particulier les stérols glucosylés non acylés (Robert A. et al., J. Am. Oil Chem. Soc. (2008) 85:761-770). Or le raffinage classique de l'huile ne permet pas de les éliminer.

La demande de brevet WO 2007/098928 porte sur un procédé de raffinage physique de charges à base de triglycérides utilisées dans des procédés de fabrication de biodiesel. Après une étape de dégommage, les triglycérides sont mis en contact avec des particules d'adsorbants, à pression atmosphérique, à des températures comprises entre 60 et 90°C, dans le but de diminuer leur teneur en phosphore. Cette étape d'adsorption est ensuite suivie d'une étape de filtration puis le produit obtenu est soumis à une étape de strippage permettant de réduire la teneur en acides gras libres.

Le procédé proposé comprend une succession de plusieurs étapes, ce qui entraîne un coût de réalisation relativement élevé. D'autre part, les températures auxquelles ont lieu les étapes de raffinage des huiles ne dépassent pas environ 100°C. Les processus mis en jeu sont des phénomènes d'adsorption sur solides, donc bien connus pour fonctionner de façon optimisée à des températures relativement basses.

La demande de brevet WO 2003/075671 A1 décrit un procédé de purification d'une huile en vue de son utilisation alimentaire avec un adsorbant comprenant un mélange complexe de silice, d'alumine, d'argile et éventuellement d'acide citrique à une température comprise entre 71 et 204°C, sans chercher à induire une réaction thermique de précipitation et/ou cristallisation.

Le brevet US 5,391,385 décrit un procédé de purification d'huile avec un adsorbant comprenant un mélange de silice et d'alumine à une température comprise entre 82 et 204°C, la proportion du mélange devant être ajustée en fonction du type d'huile traitée.

Il apparaît nécessaire de pouvoir contrôler et limiter la teneur en espèces insolubles colmatantes dans l'objectif d'améliorer l'opérabilité des unités industrielles, sans introduire un nombre trop important d'étapes dans les procédés, afin de limiter les coûts opérationnels. L'activité et la durée de vie du catalyseur pourra ainsi être améliorée et la qualité des esters et de la glycérine co-produite également.

Un objectif de la présente invention est de fournir un procédé de transestérification d'huile végétale ou animale comprenant une étape de prétraitement des huiles brutes ou semi-raffinées permettant l'élimination des hétéroéléments contenus dans les composés minoritaires tels que le phosphore, le magnésium, le calcium, le fer et/ou le zinc.

En conséquence, l'utilisation d'huile brute, n'ayant subit aucun prétraitement, ou d'une huile semi-raffinée telle que définit ci-dessus, comme charge du procédé de transestérification des huiles par un alcool est rendue possible par cette invention. De plus, le prétraitement permet une concentration des impuretés et leur transformation en un solide valorisable (engrais par exemple).

### Résumé de l'invention

La présente invention concerne un procédé de fabrication d'esters alkyliques et de glycérine à partir d'une huile végétale ou animale brute ou semi-raffinée et d'un monoalcool aliphatique comprenant une étape de purification poussée permettant d'éliminer les espèces comprenant les hétéroélements à base de phosphore, calcium, fer, magnésium ou zinc insolubles dans les conditions de température du réacteur catalytique hétérogène.

### Description détaillée de l'invention.

Le procédé de fabrication d'esters alkyliques d'acides gras et de glycérine selon la présente invention mettant en oeuvre une ou plusieurs réactions de transestérification entre une huile végétale d'origine terrestre ou aquatique ou animale brute ou semi-raffinée et un monoalcool aliphatique et utilisant un catalyseur hétérogène comprend au moins une étape de prétraitement de ladite huile consistant à faire passer l'huile dans un réacteur comprenant au moins un lit fixe d'au moins un adsorbant comprenant un oxyde réfractaire poreux dépourvu de métaux catalytiques choisis dans les groupes 6 et 8 à 12 de la classification périodique, à une température comprise entre 140°C et 320°C, à des pressions comprises entre 0,1 et 7 MPa et avec un temps de séjour compris entre 0,1 et 1 heure.

Au sens de la présente invention, une huile semi-raffinée est une huile qui a subi une étape de démucilagination, de neutralisation et de lavage à l'eau.

De manière préférée, l'étape de prétraitement est réalisée à une température comprise entre 160 et 190°C, à une pression comprise entre 0,3 et 1 MPa, avec un temps de séjour compris entre 0,2 et 0,8 heure.

Ainsi, grâce au prétraitement selon l'invention, la teneur en phosphore, indicatrice de la teneur en hétéroélément dans l'huile après prétraitement est inférieure à 1,5 ppm et de préférence inférieure à 1 ppm. Par conséquent, la teneur en calcium, magnésium, fer et /ou zinc est également inférieure à 1,5 ppm et de préférence inférieure à 1 ppm.

La teneur en phosphore, magnésium, fer, zinc et/ou calcium est déterminée par analyse par spectroscopie d'émission à plasma induit par haute fréquence (ICP-OES), par exemple avec la méthode décrite dans la norme EN 14 241, soit avec une sensibilité pour ces éléments donnée à 1 ppm.

Lors de l'étape de prétraitement de l'huile brute ou semi raffinée, on observe, après chauffage dans les conditions de température selon le procédé de la présente invention, la précipitation d'un solide comprenant les impuretés à base de phosphore, calcium, fer, zinc ou magnésium.

La fonction recherchée lors du prétraitement de l'huile brute ou semi raffinée étant uniquement une transformation thermique des hétéroéléments en phosphate mixte et de les immobiliser par adsorption, et non une fonction catalytique, le réacteur de prétraitement comprend au moins un lit fixe d'un matériau adsorbant dépourvu de métaux catalytiques.

L'étape de prétraitement consiste à faire passer l'huile végétale ou animale, brute ou semi-raffinée, dans un réacteur comprenant au moins un lit fixe d'au moins un adsorbant comprenant un oxyde réfractaire poreux dépourvu de métaux catalytiques choisis dans les groupes 6 et 8 à 12 de la classification périodique. De préférence, les adsorbants utilisés dans l'étape de prétraitement sont choisis parmi l'alumine, éventuellement activée et la silice alumine.

De manière très préférée, lesdits adsorbants sont constitués à 100% d'un oxyde réfractaire poreux, de préférence choisi parmi l'alumine, éventuellement activée et la silice alumine.

Conformément à l'invention, les adsorbants sont utilisés en lit fixe, encore appelés lits de garde, avec la particularité que ledit lit de garde est utilisé avec une température minimum d'activation de la réaction thermique de cristallisation et/ou précipitation recherchée.

Avantageusement, les adsorbants utilisés dans l'étape de prétraitement selon le procédé de la présente invention sont mis en forme. Les formes des adsorbants peuvent être sphériques, oblongues, cylindriques, par exemple sous forme d'extrudés, creuses ou pleines, cylindriques torsadées, multilobées, par exemple avec un nombre de lobes compris entre 2 et 5 ou sous forme d'anneaux.

Préférentiellement les adsorbants sont sous forme de sphères ou d'extrudés, avec un diamètre compris entre 0,5 et 20 mm, de préférence entre 0,5 et 10 mm, la forme sphérique étant très préférée.

Les dits adsorbants peuvent avantageusement présenter des formes géométriques plus particulières afin d'augmenter leur fraction de vide. Parmi ces formes particulières, les adsorbants pourront présenter les formes suivantes : cylindres creux, anneaux creux, anneaux de Rashig, cylindres creux dentelés, cylindres creux crénelés, roues de charrettes, selle de Blend, cylindres à multiples trous.

La fraction de vide de ces adsorbants est avantageusement comprise entre 0,2 et 0,75 et de préférence entre 0,35 et 0,5.

Leur diamètre extérieur varie avantageusement entre 1 et 35 mm.

De façon préférée, lesdits adsorbants présentent une macroporosité. Leur volume macroporeux, mesuré par intrusion au mercure, c'est-à-dire un volume des pores dont le diamètre moyen est de 500 Å, supérieur à 0,1 ml/g, et de manière préférée, compris entre 0,125 et 0,4 ml/g. Lesdits adsorbants présentent également avantageusement un volume poreux total supérieur à 0,60 ml/g, et de préférence compris entre 0,625 et 1,5 ml/g et une surface spécifiques exprimée en S_{BET} avantageusement comprise entre 30 m²/g et 320 m²/g.

De façon très préférée, l'adsorbant utilisé est une alumine sphérique macroporeuse de volume poreux compris entre 1,0 à 1,3 ml/g et de diamètre de 4 à 6 mm commercialisée par Axens et référencée au catalogue sous la référence ACT 139.

Les adsorbants peuvent être utilisés seuls ou en mélange. Il peut être particulièrement avantageux de superposer des adsorbants différents dans au moins deux lits différents de hauteur variable. Les adsorbants ayant le plus fort taux de vide sont de préférence utilisés dans le ou les premiers lits en entrée du réacteur de prétraitement.

Lors dudit prétraitement de l'huile brute ou semi raffinée, on observe, après chauffage dans les bonnes conditions de température, la précipitation d'un solide comprenant les impuretés à base de phosphore, calcium, magnésium, fer et/ou zinc.

Les impuretés solides viennent alors se déposer sur le lit fixe d'adsorbant, ou lit de garde avec la particularité que ledit lit de garde est utilisé avec une température minimum d'activation de la réaction thermique de cristallisation et/ou précipitation recherchée.

Selon un mode de réalisation préféré du procédé selon la présente invention, l'étape de prétraitement est réalisée dans un réacteur comprenant plusieurs lits fixes, placés en parallèle, et permutables. Ainsi, il est possible de soustraire un des lits de garde à des fins de nettoyage lorsque le ou les adsorbants le constituant sont saturés en impuretés solides.

Chaque lit peut comprendre un ou plusieurs adsorbants.

Dans le cas d'une mise en oeuvre de l'étape de prétraitement en lit fixe permutable d'au moins un adsorbant, la permutation du lit d'adsorbant saturé en impuretés est avantageusement réalisée lorsque la teneur en phosphore, calcium, magnésium, zinc ou fer dans l'huile après l'étape de prétraitement est supérieure à 2 ppm.

Le lit d'adsorbant saturé en impuretés peut être envoyé vers une étape de nettoyage.

Plusieurs options sont envisageables pour la phase de nettoyage d'un lit de garde saturé.

Selon un mode de réalisation, le lit de garde saturé peut être extrait du réacteur de prétraitement. Dans ce cas, on peut vider le liquide, puis le solide et nettoyer cette partie du réacteur. Le rechargement peut avantageusement être fait avec une nouvelle charge d'adsorbant, ou bien avec l'ancienne charge nettoyée, par exemple au solvant ou régénérée par brûlage, avant de replacer cette partie du réacteur dans le réacteur de prétraitement.

Selon un autre mode de régénération, le nettoyage du lit d'adsorbants saturé peut se faire par rinçage en ligne avec un solvant à co- ou contre-courant pour décrocher et/ou solubiliser les particules présentes. Le solvant peut être un hydrocarbure léger polaire ou non, et est avantageusement choisi parmi le méthanol, le pentane, l'éthanol, l'heptane ou l'hexane. Après une séparation en sortie de réacteur entre le solide extrait et le solvant d'extraction, le solvant est avantageusement recyclé dans le réacteur pour poursuivre l'extraction.

Selon un autre mode de réalisation, le phase de nettoyage du lit de garde saturé en impuretés solides peut être réalisée par brûlage in-situ.

Le lit d'adsorbant saturé peut être valorisé en tant que solide enrichi en impuretés. En effet, l'utilisation d'une température opératoire élevée (par exemple supérieure à 250°C) permet notamment de former un résidu solide de meilleure qualité, au niveau de sa cristallinité, ce qui le rend plus intéressant au niveau de sa valorisation.

Les charges utilisées lors de l'étape de prétraitement selon le procédé de la présente invention sont des corps gras correspondant à des substances naturelles ou élaborées, d'origine végétale ou animale, couramment regroupés sous le terme d'huile.

La charge traitée dans le procédé de prétraitement selon l'invention est une huile végétale, d'origine terrestre ou aquatique, ou animale brute composée majoritairement de triglycérides à hauteur de 80-98% poids. Les composés mineurs, c'est à dire présents à hauteur de 2 à 20% poids, sont des acides gras libres, des mono- et diglycérides, des composés oxydes de glycérides issus de la dégradation de l'huile, des polymères, des cires (hydrocarbures naturels présentes dans l'huile) des protéines contenant du soufre et/ou de l'azote, des phospholipides, des tocophérols, des stérols, des colorants naturels ainsi que des composés odorants plus ou moins volatils. Lesdites huiles brutes contiennent également, comme composés mineurs, des espèces contenant des hétéroéléments tels que le phosphore, le magnésium, le calcium, le fer ou le zinc à des teneurs pouvant aller jusqu'à 2500 ppm, sous forme principalement de phospholipides et/ou de stérols dans le cas du phosphore, du magnésium et du calcium et sous forme de stérols dans le cas du fer et/ou du zinc.

Parmi les huiles utilisables, on peut citer toutes les huiles courantes, comme les huiles de palme (concrètes ou oléines), de soja, de palmiste, de coprah, de babassu, de colza (ancien ou nouveau), de tournesol (classique ou oléique), de maïs, de coton, les huiles d'arachide, de pourghère (*Jatropha curcas*), de ricin, de lin et de crambe et toutes les huiles issues par exemple du tournesol ou du colza par modification génétique ou hybridation ou encore provenant d'algues.

Parmi les huiles utilisées, on peut encore indiquer des huiles partiellement modifiées par exemple par polymérisation ou oligomérisation, comme par exemple, les "standolies" d'huile de lin, de tournesol et les huiles végétales soufflées.

Les huiles utilisées sont neutres ou acides, vierges ou recyclées.

Le prétraitement selon la présente invention montre une efficacité significative sur l'enlèvement des stérols glucosylés non acylés. Ce prétraitement peut donc également être utilisé en amont d'une unité de transesterification homogène.

Selon le procédé de fabrication d'esters alkyliques et de glycérine selon la présente invention, le corps gras obtenu après l'étape de prétraitement contenant moins de 1 ppm de phosphore, calcium, fer, zinc ou magnésium est envoyé vers le réacteur de transestérification.

Le catalyseur hétérogène utilisé lors des étapes réactionnelles de transestérification peut être tout catalyseur connu par l'homme du métier pour son activité en transestérification des corps gras. On peut citer par exemple, les catalyseurs décrits dans les demandes de brevet FR-2 752 242, FR-2 855 517, FR-2 855 518, FR-2 855 519, FR-2 869 612, FR-2 869 613, FR-2 914 927 ou WO 2007/043 062.

A titre non exclusif, le catalyseur utilisé dans le procédé selon l'invention est un solide contenant l'oxyde de zinc et au moins une solution solide de formule générale ZnₓAl₂O₍₃₊ₓ₎, l'oxyde de zinc libre étant présent entre 5 et 30% masse et x compris dans l'intervalle ]0 ; 1 [, tel que décrit dans la demande de brevet FR 08/07 413 déposée au nom de la Demanderesse.

Le monoalcool aliphatique mis en jeu dans le procédé selon l'invention renferme par exemple de 1 à 18 atomes de carbone et de préférence de 1 à 5. Il peut être choisi parmi l'alcool méthylique, éthylique, isopropylique, propylique, butylique, isobutylique ou amylique.

Les conditions opératoires de la réaction de transestérification sont décrits dans le brevet FR-B-2 838 433 : le procédé est opéré à des températures comprises entre 130 et 220°C, à des pressions inférieures à 10 MPa, avec un excès de monoalcool par rapport à la stoechiométrie huile/alcool.

Généralement la réaction de transestérification peut être opérée selon différents modes de réalisation.

Si l'on a recours à une réaction en discontinu, on peut travailler en une ou deux étapes, c'est-à-dire réaliser une première réaction jusqu'à 85 % à 95 % de conversion en esters, refroidir en évaporant l'excès d'alcool, décanter la glycérine et finir la réaction en réchauffant à nouveau entre 130°C et 220°C et en ajoutant de l'alcool pour obtenir une conversion totale.

On peut aussi viser une conversion de 98 % en esters en travaillant suffisamment longtemps en une seule étape dans des conditions appropriées, par exemple en augmentant la température et/ou le rapport alcool/corps gras.

Si l'on choisit un procédé continu en lit fixe, la réaction se fait dans un ou plusieurs réacteurs en lit fixe successifs opérés en écoulement ascendant et en phase liquide, chacun des réacteurs étant alimenté par un mélange d'huile et d'alcool (premier réacteur) ou majoritairement d'ester et d'alcool (second réacteur). La proportion d'huile ou d'ester représente entre 20 % et 80 % et de préférence entre 37 % et 50 % masse.

La teneur en eau dans le milieu réactionnel est contrôlée pour rester inférieure à 1500 ppm masse, et préférentiellement inférieure à 1000 ppm. En sortie du ou des réacteurs, on obtient l'ester, la glycérine, ainsi que l'alcool en excès. Après plusieurs évaporations de l'alcool et séparations de l'ester et de la glycérine par décantation, on obtient des produits très purs et facilement valorisables.

L'ester carburant obtenu présente une teneur en monoglycérides d'au plus 0,8% en masse, en diglycérides d'au plus 0,2% en masse, en triglycérides d'au plus 0,2% en masse, en glycérine de moins de 0,25% en masse.

Par ce type de procédé, l'épuration finale est réduite au minimum, tout en permettant d'obtenir un ester aux spécifications carburant et une glycérine de pureté comprise entre 95 et 99,9% et de préférence entre 98 et 99,9%.

La tenue au lessivage est vérifiée dans la présente invention par une teneur en traces métalliques dissoutes provenant du catalyseur aussi bien dans l'ester formé que dans la glycérine produits, inférieures à 1 ppm.

Grâce à l'étape de prétraitement réalisée selon le procédé de la présente invention, la teneur résiduelle en phosphore, calcium, fer, zinc ou magnésium est inférieure à 1,5 ppm dans chacune des phases.

La stabilité du catalyseur est évaluée expérimentalement dans le temps par le suivi de son activité (conversion des triglycérides et/ou rendement en ester méthylique de colza).

L'analyse des effluents se fait, soit par chromatographie en phase gazeuse pour les esters et la glycérine, soit, plus rapidement, par chromatographie liquide par exclusion stérique pour les esters.

Les exemples ci-dessous illustrent l'invention sans en limiter la portée.

### Exemples

Les exemples 1 à 3 ont été réalisés dans un réacteur lit fixe traversé avec une huile de grade DNS ou semi-raffinée prétraitée dans des conditions différentes. Ils permettent de comparer l'impact du prétraitement de l'huile sur l'activité du catalyseur de transestérification au cours du temps en conditions proches du fonctionnement industriel, et sur la qualité de la glycérine obtenue. L'huile utilisée dans ces exemples est de l'huile de colza, dont la composition en acides gras est donnée dans le Tableau 1. Cependant, toute autre huile d'origine végétale pourrait donner des résultats analogues.

**Tableau 1 : Composition globale en acides gras de l'huile de colza.**

| **Glycéride d'acides gras** | Nature de la chaîne grasse | % en masse |
|---|---|---|
| Myristique | C14 : 0 | 01,1 |
| Palmitique | C16 :0 | 5 |
| Palmitoléique | C16 :1 | < 0,5 |
| Stéarique | C18 :0 | 2 |
| Oléique | C18 :1 | 59 |
| Linoléique | C18 :2 | 21 |
| Linolénique | C18 :3 | 9 |
| Arachidique | C20 :0 | < 0,5 |
| Gadoléique | C20 :1 | 1 |
| Béhénique | C22 :0 | < 0,5 |
| Erucique | C22 :1 | < 1 |
| | | |

| **Analyse des phospholipides** | | **ppm** |
|---|---|---|
| Phosphatidyéthanolamine | (PE) | 16,8 |
| Phospatodylcholine | (PC) | 21,9 |
| Sphingomyéline | (SM) | <0,1 |
| Lysophosphatidylcholine | (LPC) | <0,1 |
| Lysophosphatidyléthanolamine | (LPE) | <0,1 |
| Acide phosphatidique | (AP) | 61,3 |
| Phosphtidyl Serine | (PS) | <0,1 |

La teneur en phosphore, magnésium, calcium de cette huile semi-raffinée est donnée dans le Tableau 2.

**Tableau 2 : Composition en P, Ca, Mg de l'huile de colza semi-raffinée.**

| **Espèces** | teneur en ppm |
|---|---|
| P | 9 |
| Ca | 5 |
| Mg | 2 |

L'indice d'acide de l'huile DNS, déterminée selon la méthode EN14104 est inférieur à 0,2 mg KOH/g huile.

Dans les exemples, la teneur en Fe déterminée par ICP est inférieure à la limite de quantification (<1 ppm) aussi bien sur la charge que sur l'effluent. Toutefois, le procédé de prétraitement montre également son efficacité au regard de la captation du fer comme le montre l'analyse MEB-EDX faite sur la masse d'adsorbants après test. En effet, l'analyse qualitative montre la présence de zones riches en fer élémentaire non associées à un contre ion montrant qu'il ne s'agit pas d'un résidu de corrosion.

Les exemples 4 à 5 ont été réalisés dans un réacteur lit fixe traversé avec une huile brute prétraitée dans des conditions différentes. Ils permettent de comparer l'impact du prétraitement de l'huile sur l'activité du catalyseur de transestérification au cours du temps en conditions proches du fonctionnement industriel, et sur la qualité de la glycérine obtenue. L'huile utilisée dans ces exemples est de l'huile de colza brute dont la composition en acides gras est celle du Tableau 1. Cependant, toute autre huile d'origine végétale pourrait donner des résultats analogues.

La teneur en phosphore, magnésium, calcium et fer de cette huile brute est donnée dans le Tableau 3.

**Composition globale de l'huile brute de colza.**

| **Espèces** | teneur en ppm |
|---|---|
| P | 101 |
| Ca | 86 |
| Mg | 14 |
| Fe | 1 |

**Tableau 3 : Composition en P, Ca, Mg de l'huile brute de colza brute.**

| | teneur en % poids |
|---|---|
| Triglycérides | 97,2 |
| Diglycérides + stérols | 0,2 |
| Stérols estérifiés | 1,8 |
| Stérols libres + autres dont phospholipides | 0,8 |

L'indice d'acide de l'huile de colza brute, déterminée selon la méthode EN14104 est égal à 1,2 mg KOH/g huile.

L' exemple 6 montre l'efficacité du prétraitement selon la présente invention sur la captation des stérols glucosylés sur une huile de colza semi-raffinée.

L'adsorbant utilisé lors de l'étape de prétraitement ainsi que les conditions opératoires de l'étape de transestérification sont identiques dans tous les exemples.

L'huile est prétraitée dans un réacteur de volume de 3,6L chargé entièrement d'un lit fixe d'adsorbant constitué d'une alumine sphérique de diamètre compris entre 3 et 6 mm. L'alumine présente un volume macroporeux, mesuré par intrusion au mercure, c'est-à-dire un volume des pores dont le diamètre moyen est de 500 Å, égal à 0,35 ml/g, un volume poreux total égal à 1,2 ml/g et une surface spécifique exprimée en S_{BET} égale à 140 ^{m2}/g.

Le catalyseur hétérogène utilisé lors de la réaction de transestérification est un solide préparé par malaxage d'un gel d'alumine et d'oxyde de zinc (mêmes provenances que dans les exemples précédents) en présence de 5,8% d'acide nitrique en solution dans de l'eau, de façon à obtenir une composition du matériau dont l'analyse élémentaire est 39% Zn et 27% Al. Le matériau obtenu est extrudé avec une filière de 3 mm de diamètre et soumis à un traitement thermique à 650°C pendant 2h.

La diffraction des rayons X permet une détermination quantitative des différentes phases. On détecte 27% d'oxyde de zinc ZnO et deux solutions solides : une riche en zinc et une seconde riche en aluminium.

L'analyse par affinement de structure permet d'aboutir à la composition de chacune de ces phases : ZnO (27%), Zn_{0,7}Al₂O_{3,7} (51%, paramètre de maille 8,08Å) et Zn_{0,33}Al₂C_{3,33} (22%, paramètre de maille 8,01Å).

Dans ces exemples, le catalyseur est mis en oeuvre en une seule étape. Pour obtenir un biodiesel répondant aux spécifications, il serait nécessaire de procéder à l'issue de cette première étape à une décantation en évaporant l'alcool et en refroidissant, puis d'achever la réaction de transestérification en ajoutant la partie de l'alcool évaporé.

Pour mettre en oeuvre cette première étape catalytique, 15cm de billes de verre sont introduites dans un réacteur tubulaire de 166 cm³, puis 83g de catalyseur sous forme d'extrudés puis 64cm de billes de verre, l'ensemble étant chauffé au moyen de coquille chauffante. Une étape de séchage du catalyseur est réalisé sous flux de méthanol à température ambiante, lorsque la teneur en eau du méthanol sortant est égale à la teneur en eau du méthanol entrant, l'huile de colza est injectée à une vvh de 1h⁻¹ (volume d'huile par volume de catalyseur par heure), un ratio massique de 0.8 entre l'huile et le méthanol étant utilisé. Trois températures différentes ont été testées, le dernier point à 185°C est un point retour permettant de vérifier la stabilité du catalyseur en test. La durée totale d'un essai est de 300h. Les prélèvements sont effectués lorsque l'unité est en régime stabilisé.

### Exemple 1 (comparatif) : Procédé de fabrication d'esters méthyliques et de glycérine à partir d'une huile végétale semi-raffinée non prétraitée et de méthanol.

Le premier exemple comprend uniquement une étape de transestérification. La composition de l'huile mise en jeu dans la réaction de transestérification est donnée dans le tableau 1. La teneur en phosphore, calcium et magnésium est donnée dans le tableau 2.

Le catalyseur décrit ci-dessus est mis en oeuvre dans les conditions opératoires également décrites précédemment. Les prélèvements effectués lorsque l'unité est en régime stabilisé aux différentes températures sont analysés par chromatographie en phase gazeuse (GPC). Les analyses sont données dans le tableau suivant.

**Tableau 4 : Composition des effluents de l'exemple 1**

| % massique | Triglycérides % pds | Diglycérides %pds^{a} | Monoglycérides % pds | esters méthyliques %pds |
|---|---|---|---|---|
| 185 °C | 6.20 | 4.10 | 4.40 | 85.30 |
| 165°C | 19.90 | 9.10 | 5.10 | 65.90 |
| 175 °C | 13.50 | 6.80 | 4.80 | 74.90 |
| 185°C (point retour) | 9.70 | 5.10 | 4.60 | 80.50 |

| | | | | |
|---|---|---|---|---|
| ^{a} % représentant les diglycérides et stérols | | | | |

Le catalyseur mis en oeuvre, sans étape de prétraitement d'huile, présentent une activité qui diminue au cours du temps. Cette perte d'activité est mise en évidence par la comparaison des performances du catalyseur entre le point direct à 185°C et le point retour.

Après transestérification, les effluents sont séparés par vaporisation du méthanol puis par décantation. Les phases glycérine et ester obtenues sont analysées par ICP. La teneur en phosphore, calcium et magnésium est présentée dans le tableau 5. Ce tableau montre que la qualité de la glycérine est non optimale.

**Tableau 5 : Composition en P, Ca, Mg dans la phase glycérine et ester**

| **Espèces** | teneur en ppm (phase glycérine) | teneur en ppm (phase ester) |
|---|---|---|
| P | 8 | <1ppm |
| Ca | 5 | <1ppm |
| Mg | 2 | <1ppm |

Lors de ce test sur la conduite de l'unité pilote, une hausse de la perte de charge a été constatée. Lors du déchargement du réacteur, un dépôt solide à l'entrée du réacteur a été observé sur le catalyseur pouvant expliquer ce phénomène. La réalisation d'un bilan matière en P, Mg, Ca est délicate car il est difficile de dissocier le dépôt du catalyseur.

### Exemple 2 (non conforme à l'invention) : Procédé de fabrication d'esters méthyliques et de glycérine à partir d'une huile végétale semi-raffinée et de méthanol avec prétraitement de l'huile à basse température.

Le deuxième exemple comprend une étape de prétraitement de l'huile à basse température et une étape de transestérification de l'huile prétraitée.

La composition de l'huile en acide gras entrant dans le réacteur de prétraitement est donnée dans le Tableau 1. La teneur en phosphore, calcium et magnésium est donnée dans le tableau 2.

Les conditions de mises en oeuvre du prétraitement sont 130°C, 0,7 MPa, avec un temps de séjour de 35 minutes.

A la sortie du réacteur de prétraitement, la composition en acide gras est inchangée. En revanche, la teneur en phosphore, calcium et magnésium est donnée dans le Tableau 6. L'efficacité de la purification est de 33% pour le phosphore, 20% pour le calcium et 25% pour le magnésium.

**Tableau 6 : Composition en P, Ca, Mg de l'huile de colza après prétraitement à 130°C**

| **Espèces** | teneur en ppm |
|---|---|
| P | 6ppm |
| Ca | 4ppm |
| Mg | 1.5ppm |

L'huile partiellement purifiée alimente alors le réacteur de transestérification. Le catalyseur et les conditions opératoires sont les mêmes que celles de l'exemple 1.

Les prélèvements effectués lorsque l'unité est en régime stabilisé aux différentes températures sont analyses par GPC. Les analyses sont données dans le Tableau 7.

**Tableau 7 : Composition des effluents de l'exemple 2**

| % massique | Triglycérides % pds | Diglycérides %pds^{a} | Monoglycérides % pds | esters méthyliques %pds |
|---|---|---|---|---|
| 185 °C | 6.20 | 4.20 | 4.10 | 85.50 |
| 165°C | 20 | 9.20 | 5.20 | 66 |
| 175 °C | 13.10 | 6.90 | 4.90 | 75.10 |
| 185°C (point retour) | 9.00 | 5.30 | 4.90 | 80.70 |

| | | | | |
|---|---|---|---|---|
| ^{a} % représentant les diglycérides et stérols | | | | |

Le catalyseur mis en oeuvre, avec étape de prétraitement partiel de d'huile, présentent une activité qui diminue au cours du temps. La qualité de purification ne semble pas suffisante pour obtenir la stabilité du catalyseur durant les 300h de test.

Après transestérification, les effluents sont séparés par vaporisation du méthanol puis par décantation. Les phase glycérine et ester sont analysées par ICP. La teneur en phosphore, magnésium et calcium est présentée dans le tableau 8. Ce tableau montre que la qualité de la glycérine est non optimale.

**Tableau 8 : Composition en P, Ca, Mg dans la phase glycérine et ester**

| **Espèces** | teneur en ppm (phase glycérine) | teneur en ppm (phase ester) |
|---|---|---|
| P | 7 | <1ppm |
| Ca | 3 | <1ppm |
| Mg | 1 | <1ppm |

Lors de ce test sur la conduite de l'unité pilote, une hausse de la perte de charge a également été constatée. Lors du déchargement du réacteur, un dépôt solide sur le catalyseur à l'entrée du réacteur a été observé pouvant expliquer ce phénomène. La réalisation d'un bilan matière, en P, Mg, Ca est délicate car il est difficile de dissocier le dépôt du catalyseur.

### Exemple 3 (selon l'invention) : Procédé de fabrication d'esters méthyliques et de glycérine à partir d'une huile végétale semi-raffinée et de méthanol avec prétraitement de l'huile à haute température.

Cet exemple comprend une étape de prétraitement de l'huile à haute température et une étape de transestérification de l'huile prétraitée.

La composition de l'huile en acide gras entrant dans le réacteur de prétraitement est donnée dans le Tableau 1. La teneur en phosphore, calcium et magnésium est donnée dans le tableau 2.

Les conditions de mises en oeuvre sont 180°C, 0,7 MPa, et un temps de séjour égal à 35 minutes.

À la sortie de ce réacteur, la composition en acide gras est inchangée (voir tableau 1). En revanche, la teneur en phosphore, calcium et magnésium est donnée dans le Tableau 9. La qualité de la purification est supérieure à 85% pour le phosphore. La détermination du taux de purification est délicate en raison de la limite de détection de l'appareil analytique.

**Tableau 9 : Composition en P, Ca, Mg de l'huile de colza après prétraitement à 180°C**

| **Espèces** | teneur en ppm |
|---|---|
| P | <1ppm |
| Ca | <1ppm |
| Mg | <1ppm |

L'huile prétraitée entre alors dans le réacteur de transestérification. Le catalyseur et les conditions opératoires sont les mêmes que celles de l'exemple 1.

Les prélèvements effectués lorsque l'unité est en régime stabilisé aux différentes températures sont analyses par GPC. Les analyses sont données dans le Tableau 10.

**Tableau 10 : Composition des effluents de l'exemple 3**

| % massique | Triglycérides % pds | Diglycérides %pds^{a} | Monoglycérides % pds | esters méthyliques %pds |
|---|---|---|---|---|
| 185 °C | 6.10 | 4.20 | 4.30 | 85.40 |
| 165°C | 18.90 | 8.10 | 4.10 | 68.90 |
| 175 °C | 11.50 | 6.80 | 4.80 | 74.90 |
| 185°C (point retour) | 6.20 | 4.10 | 4.40 | 85.30 |

| | | | | |
|---|---|---|---|---|
| ^{a} % représentant les diglycérides et stérols | | | | |

Le catalyseur mis en oeuvre, avec étape de prétraitement d'huile à haute température, présentent une activité stable au cours du temps. De plus l'activité catalytique de ce catalyseur est plus importante qu'un catalyseur mis en oeuvre sans étape de prétraitement d'huile.

Après transestérification, les effluents sont séparés par vaporisation du méthanol puis par décantation. Les phase glycérine et ester sont analysées par ICP. La teneur en phosphore, calcium et magnésium est présentée dans le tableau 11. Ce tableau montre que la glycérine est exempte de phosphore, calcium et magnésium.

**Tableau 11 : Composition en P, Ca, Mg dans la phase glycérine et ester**

| **Espèces** | teneur en ppm (phase glycérine) | teneur en ppm (phase ester) |
|---|---|---|
| P | <1ppm | <1ppm |
| Ca | <1ppm | <1ppm |
| Mg | <1ppm | <1ppm |

La conduite de l'unité pilote avec cette huile purifiée s'est améliorée. En effet, aucune hausse de perte de charge n'a été constatée. De même, lors du déchargement du réacteur, aucun dépôt solide sur l'adsorbant n' a été observé.

### Exemple 4 (comparatif) : Procédé de fabrication d'esters méthyliques et de glycérine à partir d'une huile brute végétale non prétraitée et de méthanol_{.}

Cet exemple comprend uniquement une étape de transestérification. La composition de l'huile brute mise en jeu dans la réaction de transestérification est donnée dans le tableau 1. La teneur en phosphore, calcium et magnésium est donnée dans le tableau 3.

Le catalyseur décrit ci-dessus est mis en oeuvre dans les conditions opératoires également décrites précédemment. Les prélèvements effectués lorsque l'unité est en régime stabilisé aux différentes températures sont analysés par chromatographie en phase gazeuse (GPC). L'unité pilote n'arrive jamais à atteindre un régime stabilisé et le test doit être interrompu pour cause de bouchage en entrée de lit au bout de 4 jours. L'huile brute non prétraitée ne peut donc pas être utilisée comme charge du procédé de transesterification hétérogène.

### Exemple 5 (selon l'invention): Procédé de fabrication d'esters méthyliques et de glycérine à partir d'une huile végétale et de méthanol avec prétraitement de l'huile brute à haute température

Cet exemple comprend une étape de prétraitement de l'huile brute à haute température et une étape de transestérification de l'huile prétraitée.

La composition de l'huile en acide gras entrant dans le réacteur de prétraitement est donnée dans le Tableau 1. La teneur en phosphore, calcium et magnésium est donnée dans le tableau 3.

Les conditions de mises en oeuvre sont 180°C, 0,7 MPa, avec un temps de séjour égal à 1 heure.

A la sortie de ce réacteur, la composition en acide gras est inchangée (voir tableau 1). En revanche, la teneur en phosphore, calcium et magnésium et fer est donnée dans le Tableau 12. La détermination du taux de purification est délicate en raison de la limite de détection de l'appareil analytique.

**Tableau 12 : Composition en P, Ca, Mg, Fe de l'huile de colza après prétraitement à 180°C**

| **Espèces** | teneur en ppm |
|---|---|
| P | <1ppm |
| Ca | <1ppm |
| Mg | <1ppm |
| Fe | <1ppm |

L'huile prétraitée entre alors dans le réacteur de transestérification. Le catalyseur et les conditions opératoires sont les mêmes que celles de l'exemple 1.

Les prélèvements effectués lorsque l'unité est en régime stabilisé aux différentes températures sont analyses par GPC. Les analyses sont données dans le Tableau 13. Aucun bouchage n'a été constaté. L'indice d'acide de l'huile brute purifiée, déterminée selon la méthode EN14104 est égal à 1,1 g KOH/g huile.

**Tableau 13 : Composition des effluents de l'exemple 5**

| % massique | Triglycérides | Diglycérides | Monoglycérides | esters méthyliques |
|---|---|---|---|---|
| | % pds | %pds^{a} | % pds | %pds |
| 185 °C | 8.2 | 5 | 4.8 | 82 |
| 165°C | 22.5 | 10.1 | 5.3 | 62.1 |
| 175 °C | 12.4 | 9.8 | 5.1 | 72.7 |
| 185°C (point retour) | | | | |
| | 8.8 | 5.2 | 5 | 81 |

| | | | | |
|---|---|---|---|---|
| ^{a} % représentant les diglycérides et stérols | | | | |

Le catalyseur mis en oeuvre, avec étape de prétraitement d'huile à haute température, présentent une activité stable au cours du temps. L'activité catalytique de ce catalyseur est moins importante qu'un catalyseur mis en oeuvre avec une huile DNS à cause de la teneur en acides gras résiduels. L'utilisation du prétraitement à chaud permet au procédé de transestérification d'utiliser de l'huile brute comme charge ce qui permet d'éliminer des étapes de raffinage traditionnel plus coûteuse.

Après transestérification, les effluents sont séparés par vaporisation du méthanol puis par décantation. Les phase glycérine et ester sont analysées par ICP. La teneur en phosphore, calcium et magnésium est présentée dans le tableau 14. Ce tableau montre que la glycérine est exempte de phosphore, calcium et magnésium.

**Tableau 14 : Composition en P, Ca, Mg dans la phase glycérine et ester**

| **Espèces** | teneur en ppm (phase glycérine) | teneur en ppm (phase ester) |
|---|---|---|
| P | <1ppm | <1ppm |
| Ca | <1ppm | <1ppm |
| Mg | <1ppm | <1ppm |

### Exemple 6 (selon l'invention): Efficacité du prétraitement sur la captation des stérols glucosylés sur une huile de colza DNS.

Cet exemple comprend une étape de prétraitement de l'huile de colza DNS dopée en stérols glucosylés non acylés (fournisseur, ASG, laboratoire allemand) à hauteur d'une centaine de ppm à haute température.

L'analyse de la teneur est donnée dans la publication "Quantification of free and esterified steryl glucosides in vegetable oils and biodiesel" by Florence Lacoste, Franck Dejean, Hugues Griffon and Charlotte Rouquette publié dans Eur. J. Lipid Sci. Technol. 2009, 111, 822-828. Cette analyse étant complexe et coûteuse, elle n'a pas été réalisée de façon systématique dans le cas des exemples précédents. Mais nous pouvons penser que les résultats sont identiques.

La composition de l'huile en acide gras entrant dans le réacteur de prétraitement est donnée dans le Tableau 1. La teneur en phosphore, calcium et magnésium et stérols glucosylés est donnée dans le tableau 15.

**Tableau 15 : Composition en P, Ca, Mg et stérols glucosylés de l'huile de colza semi-raffinée.**

| **Espèces** | teneur en ppm |
|---|---|
| P | 9 |
| Ca | 5 |
| Mg | 2 |
| Stérols Glucosylés acylés | 25 |
| Stérols Glucosylés non acylés | 111 |

Les conditions de mises en oeuvre sont 180°C, 0,7 MPa, avec un temps de séjour égal à 1 heure

À la sortie de ce réacteur, la composition en acide gras est inchangée (voir tableau 1). En revanche, la teneur en phosphore, calcium, magnésium, fer et stérol glucosylé est donnée dans le Tableau 12. Le prétraitement montre une efficacité significative sur l'enlèvement des stérols glucosylés non acylés.

**Tableau 16 : Composition en P, Ca, Mg, Fe et stérols glucosylés de l'huile de colza après prétraitement à 180°C**

| **Espèces** | teneur en ppm |
|---|---|
| P | <1ppm |
| Ca | <1ppm |
| Mg | <1ppm |
| Fe | <1ppm |
| Stérols glucosylés acylés | 28 |
| Stérols glucosylés non acylés | 25 |

## Revendications

1. Procédé de fabrication d'esters alkyliques d'acides gras et de glycérine mettant en oeuvre une ou plusieurs réactions de transestérification entre une huile végétale ou animale brute ou semi-raffinée et un monoalcool aliphatique et utilisant un catalyseur hétérogène **caractérisé en ce qu'**il comprend au moins une étape de prétraitement de l'huile consistant à faire passer ladite huile dans un réacteur de prétraitement comprenant au moins un lit fixe d'au moins un adsorbant à base d'oxyde réfractaire poreux dépourvu de métaux catalytiques choisis dans les métaux des groupes 6 et 8 à 12 de la classification périodique, à une température comprise entre 140°C et 320°C, à une pression comprise entre 0,1 et 7 MPa et avec un temps de séjour compris entre 0,1 et 1 heure.

2. Procédé selon la revendication 1 dans lequel l'étape de prétraitement est réalisée à une température comprise entre 160 et 190°C. à une pression comprise entre 0,3 et 1 MPa, avec un temps de séjour compris entre 0,2 et 0,8 heure.

3. Procédé selon l'une des revendications 1 ou 2 dans lequel les adsorbants utilisés lors de l'étape de prétraitement sont choisis parmi l'alumine, éventuellement activée et la silice alumine.

4. Procédé selon la revendication 3 dans lequel lesdits adsorbants sont constitués à 100% d'un oxyde réfractaire poreux choisi parmi l'alumine, éventuellement activée et la silice alumine.

5. Procédé selon l'une des revendications précédentes dans lequel lesdits adsorbants sont sous forme de sphères ou d'extrudés, avec un diamètre compris entre 0,5 et 20mm, de préférence entre 0,5 et 10 mm.

6. Procédé selon l'une des revendications précédentes dans lequel la fraction de vide des adsorbants est avantageusement comprise entre 0,2 et 0,75 et de préférence entre 0,35 et 0,5.

7. Procédé selon l'une des revendications précédentes dans lequel lesdits adsorbants présentent un volume macroporeux, mesuré par intrusion au mercure, c'est-à-dire un volume des pores dont le diamètre moyen est de 500Å supérieur à 0,1 ml/g, un volume poreux total supérieur à 0,60 ml/g, et une surface spécifique exprimée en S_{BET} comprise entre 30 m²/g et 320 m²/g.

8. Procédé selon l'une des revendications précédentes dans lequel l'étape de prétraitement est réalisée dans un réacteur comprenant plusieurs lits fixes d'adsorbants placés en parallèle, et permutables.

9. Procédé selon l'une des revendications précédentes dans lequel des adsorbants différents sont superposés dans au moins deux lits différents de hauteur variable.

10. Procédé selon la revendication 9 dans lequel les adsorbants ayant le plus fort taux de vide sont utilisés dans le ou les premiers lits en entrée du réacteur de prétraitement.

11. Procédé selon l'une des revendications 7 à 10 dans lequel la permutation du lit d'adsorbant saturé en impuretés est réalisée lorsque la teneur en phosphore, calcium, magnésium ou fer dans l'huile issue de l'étape de prétraitement est supérieure à 2 ppm.

12. Procédé selon la revendication 11 dans lequel le lit d'adsorbant saturé en impuretés est envoyé vers une étape de nettoyage.

13. Procédé selon la revendication 11, dans lequel le lit d'adsorbant saturé en impuretés est valorisé en tant que solide enrichi en impuretés.

14. Procédé selon l'une des revendications précédentes dans lequel les huiles semi-raffinées sont neutres ou acides, vierges ou recyclées et choisies parmi les huiles de palme, concrètes ou oléines, de soja, de palmiste, de coprah, de babassu, de colza de tournesol,classique ou oléique, de maïs, de coton, les huiles d'arachide, de pourghère (*Jatropha curcas*), de ricin, de lin, de crambe, toutes les huiles issues par exemple du tournesol ou du colza par modification génétique ou hybridation ou encore provenant d'algues, les huiles partiellement modifiées par polymérisation ou oligomérisation, comme par exemple, les "standolies" d'huile de lin, de tournesol et les huiles végétales soufflées.

15. Procédé selon l'une des revendications précédentes **caractérisé en ce qu'**il est opéré à des températures comprises entre 130 et 220°C, à des pressions inférieures à 10 MPa, avec un excès de monoalcool par rapport à la stoechiométrie huile/alcool.

## Claims

1. A method of producing fatty acid alkyl esters and glycerin, implementing one or more transesterification reactions between a crude or semi-refined vegetable or animal oil and an aliphatic monoalcohol, and using a heterogeneous catalyst, **characterized in that** it comprises at least one oil pre-treatment stage that consists in passing said oil into a pre-treatment reactor comprising at least one fixed bed of at least one adsorbent based on a porous refractory oxide free of catalytic metals selected from metals of groups 6 and 8 to 12 of the periodic table, at a temperature ranging between 140°C and 320°C, at pressures ranging between 0.1 and 7 MPa and with a residence time ranging between 0.1 and 1 hour.

2. A method as claimed in claim 1, wherein the pre-treatment stage is carried out at a temperature ranging between 160°C and 190°C, at a pressure ranging between 0.3 and 1 MPa, with a residence time ranging between 0.2 and 0.8 hour.

3. A method as claimed in any one of claims 1 or 2, wherein the adsorbents used in the pre-treatment stage are selected from among alumina, optionally activated, and silica-alumina.

4. A method as claimed in claim 3, wherein said adsorbents consist of 100 % porous refractory oxide selected from among alumina, optionally activated, and silica-alumina.

5. A method as claimed in any one of the previous claims, wherein said adsorbents come in form of spheres or extrudates, with a diameter ranging between 0.5 and 20 mm, preferably between 0.5 and 10 mm.

6. A method as claimed in any one of the previous claims, wherein the void fraction of the adsorbents advantageously ranges between 0.2 and 0.75, preferably between 0.35 and 0.5.

7. A method as claimed in any one of the previous claims, wherein said adsorbents exhibit a macropore volume, measured by mercury intrusion, i.e. a pore volume, for pores whose average diameter is 500 Å, above 0.1 ml/g, a total pore volume above 0.60 ml/g and a specific surface area expressed in S_{BET} ranging between 30 and 320 m²/g.

8. A method as claimed in any one of the previous claims, wherein the pre-treatment stage is carried out in a reactor comprising several fixed adsorbent beds arranged in parallel and permutable.

9. A method as claimed in any one of the previous claims, wherein different adsorbents are superposed in at least two different beds of variable height.

10. A. method as claimed in claim 9, wherein the adsorbents having the highest void fraction are used in the first bed(s) at the pre-treatment reactor inlet.

11. A method as claimed in any one of claims 7 to 10, wherein permutation of the impurity-saturated adsorbent bed is achieved when the proportion of phosphorus, calcium, magnesium or iron in the oil from the pre-treatment stage is above 2 ppm.

12. A method as claimed in claim 11, wherein the impurity-saturated adsorbent bed is sent to a cleaning stage.

13. A method as claimed in claim 11, wherein the impurity-saturated adsorbent bed is valorized as an impurity-enriched solid.

14. A method as claimed in any one of the previous claims, wherein the semi-refined oils are neutral or acid, virgin or recycled, and selected from among palm oil, concrete or olein, soybean oil, palm nut oil, copra oil, babassu oil, rapeseed oil, sunflower oil, conventional or oleic, com oil, cotton oil, peanut oil, pourgher oil (*Jatropha curcas*), castor oil, linseed oil and crambe oil, all the oils obtained from sunflower and rapeseed for example by genetic engineering or hybridization, or obtained from algae, partially modified oils, by polymerization or oligomerization for example, such as linseed oil and sunflower stand oils, and blown vegetable oils.

15. A method as claimed in any one of the previous claims, **characterized in that** it is operated at temperatures ranging between 130°C and 220°C, at pressures below 10 MPa, with excess monoalcohol with respect to the oil/alcohol stoichiometry.

## Patentansprüche

1. Verfahren zur Herstellung von Fettsäurealkylestern und von Glycerin, bei dem eine oder mehrere Umesterungsreaktionen zwischen einem rohen oder halbraffinierten pflanzlichen oder tierischen Öl und einem aliphatischen Monoalkohol und unter Verwendung eines heterogenen Katalysators durchgeführt werden, **dadurch gekennzeichnet, dass** es mindestens einen Schritt zur Vorbehandlung des Öls umfasst, der darin besteht, das Öl durch einen Vorbehandlungsreaktor zu führen, umfassend mindestens ein Festbett mit mindestens ein Adsorptionsmittel auf der Basis von porösem refraktärem Oxid, das frei von katalytischen Metallen ist, ausgewählt aus den Metallen der Gruppe 6 und 8 bis 12 des Periodensystems der Elemente, bei einer Temperatur im Bereich zwischen 140 °C und 320 °C, bei einem Druck im Bereich zwischen 0,1 und 7 MPa und mit einer Verweildauer im Bereich zwischen 0,1 und 1 Stunde.

2. Verfahren nach Anspruch 1, wobei der Schritt zur Vorbehandlung bei einer Temperatur im Bereich zwischen 160 und 190 °C, bei einem Druck im Bereich zwischen 0,3 und 1 MPa, mit einer Verweildauer im Bereich zwischen 0,2 und 0,8 Stunden ausgeführt wird.

3. Verfahren nach einem der Ansprüche 1 oder 2, wobei die Adsorptionsmittel, die während des Schritts zur Vorbehandlung verwendet werden, aus gegebenenfalls aktiviertem Aluminiumoxid und Siliciumdioxid-Aluminiumoxid ausgewählt sind.

4. Verfahren nach Anspruch 3, wobei die Adsorptionsmittel zu 100 % aus einem porösen refraktären Oxid bestehen, das aus gegebenenfalls aktiviertem Aluminiumoxid und Siliciumdioxid-Aluminiumoxid ausgewählt ist.

5. Verfahren nach einem der vorhergehenden Ansprüche, wobei die Adsorptionsmittel in Form von Kugeln oder Extrudaten mit einem Durchmesser im Bereich zwischen 0,5 und 20 mm, bevorzugt zwischen 0,5 und 10 mm, vorliegen.

6. Verfahren nach einem der vorhergehenden Ansprüche, wobei das relative Porenvolumen der Adsorptionsmittel vorteilhafterweise im Bereich zwischen 0,2 und 0,75 und bevorzugt zwischen 0,35 und 0,5 liegt.

7. Verfahren nach einem der vorhergehenden Ansprüche, wobei die Adsorptionsmittel ein Makroporenvolumen, gemessen mittels Quecksilberintrusion, das heißt, ein Volumen der Poren, deren mittlerer Durchmesser 500 Å beträgt, größer als 0,1 ml/g, ein Gesamtporenvolumen größer als 0,60 ml/g, und eine spezifische Oberfläche, ausgedrückt in S_{BET}, im Bereich zwischen 30 m²/g und 320 m²/g aufweisen.

8. Verfahren nach einem der vorhergehenden Ansprüche, wobei der Schritt zur Vorbehandlung in einem Reaktor ausgeführt wird, umfassend mehrere, parallel und austauschbar angeordnete Festbetten mit Adsorptionsmitteln.

9. Verfahren nach einem der vorhergehenden Ansprüche, wobei verschiedene Adsorptionsmittel in mindestens zwei verschiedenen Betten mit variabler Höhe übereinandergeschichtet werden.

10. Verfahren nach Anspruch 9, wobei die Adsorptionsmittel, die das höchste relative Porenvolumen aufweisen, in dem oder den ersten Betten am Eingang des Reaktors zur Vorbehandlung verwendet werden.

11. Verfahren nach einem der Ansprüche 7 bis 10, wobei der Austausch des Betts mit Adsorptionsmittel, das mit Verunreinigungen gesättigt ist, ausgeführt wird, wenn der Gehalt an Phosphor, Calcium, Magnesium oder Eisen in dem Öl aus dem Schritt zur Vorbehandlung größer als 2 ppm ist.

12. Verfahren nach Anspruch 11, wobei das Bett mit Adsorptionsmittel, das mit Verunreinigungen gesättigt ist, in einen Schritt zur Reinigung geschickt wird.

13. Verfahren nach Anspruch 11, wobei das Bett mit Adsorptionsmittel, das mit Verunreinigungen gesättigt ist, als mit Verunreinigungen angereicherter Feststoff veredelt wird.

14. Verfahren nach einem der vorhergehenden Ansprüche, wobei die halbraffinierten Öle säurefrei oder säurehaltig, nativ oder recycelt und aus konkreten oder oleinhaltigen Palmölen, Sojaölen, Palmkernölen, Kokosölen, Babassuölen, Rapsölen, herkömmlichen oder ölsäurehaltigen Sonnenblumenölen, Maisölen, Baumwollsamenölen, Erdnussölen, Purgiernussölen (*Jatropha curcas*), Rizinusölen, Leinölen, Krambeölen, allen Ölen, die durch gentechnische Veränderung oder durch Hybridisierung zum Beispiel aus Sonnenblume oder Raps hervorgegangen sind oder auch aus Algen stammen, den durch Polymerisation oder Oligomerisation teilweise modifizierten Ölen, wie zum Beispiel den "Standölen" von Leinöl, von Sonnenblume und den geblasenen Pflanzenölen ausgewählt sind.

15. Verfahren nach einem der vorhergehenden Ansprüche, **dadurch gekennzeichnet, dass** es bei Temperaturen im Bereich zwischen 130 und 220 °C, bei Drücken unterhalb von 10 MPa mit einem Überschuss an Monoalkohol, bezogen auf die Öl/Alkohol-Stöchiometrie, betrieben wird.
